# EUROPEAN PATENT SPECIFICATION

(11) **EP 2 765 757 B1**
(45) Date of publication and mention of the grant of the patent: **27.06.2018**
(21) Application number: 13290026.7
(22) Date of filing: 11.02.2013
(51) Int. Cl.: H04L 29/08, H04W 4/00

(54) **Method for exploiting M2M communication properties in cellular systems**
Verfahren zur Nutzung von M2M-Kommunikationseigenschaften in zellularen Systemen
Procédé pour l'exploitation des propriétés de communications M2M dans des systèmes cellulaires

(43) Date of publication of application: 13.08.2014
(73) Proprietor: Alcatel Lucent, 91620 Nozay (FR)
(72) Inventor: Fonseca dos Santos, Andre, 70197 Stuttgart (DE)
(74) Representative: Wetzel, Emmanuelle

(56) References cited:
- EP-A1- 2 533 553
- US-A1- 2010 310 011
- ALCATEL-LUCENT SHANGHAI BELL ET AL: "Discussion on high correlation service category for Machine Type Communication (MTC)", 3GPP DRAFT; S1-10XXXX DISCUSSION ON HIGH CORRELATION SERVICE CATEGORY FOR MTC_V1 CLEAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. SanFrancisco; 20100222, 5 February 2010 (2010-02-05), XP050431489, [retrieved on 2010-02-05]
- "3GPP TR 23888 V1.0.0 3rd Generation Partnership Project; Technical Specification Group Services and System Aspects; System Improvements for Machine Type Communications (Release 10)", 3RD GENERATION PARTNERSHIP PROJECT (3GPP); TECHNICAL REPORT (TR), XX, XX, no. TR 23888 V1.0.0, 1 July 2010 (2010-07-01), pages 1-80, XP002676885,

## Description

### Technical Field

The disclosure relates to telecommunication systems, and more particularly to a method for machine to machine, M2M, communication in a cellular system.

### Background

The paradigm "Internet of Things" brings the new reality of connecting a huge amount of machines in a cellular system. Indeed, it is predicted that a factor of 10X to 100 X machines/sensors per users will be deployed up to 2020. Several applications for such machines will require nation-wide coverage and easy access to the internet. Therefore, the natural step to be taken is to incorporate such devices into cellular systems. In light of that, 3GPP has started up efforts on the extension of LTE for example for supporting such machine transmission mode. It seems that the big challenge to overcome is the utter amount of devices connecting to the network. And different alternatives beyond increasing the available capacity of the cellular systems must be explored.

EP 2 533 553 A1 discloses an MTC user equipment that detects whether a predetermined event occurs and then transmits a first report message to one or more MTC servers.

US 2010/310011 A1 discloses a method for receiving by a sampler, over a wireless channel, a sum signal comprising first and second user equipment signals transmissions based on an S-sparse combination of a set of vectors.

3GPP draft; S1-10xxxx vol. SA WG1, no SanFrancisco; 20100222, 5 February 2010 discloses high correlation service categories for machine-type communication (MTC).

### Summary

The invention is defined by the independent claims. Various embodiments provide for an improved method in a cellular system, an improved computer program product and an improved measurement controller as described by the subject matter of the independent claims. Advantageous embodiments are described in the dependent claims.

The term "M2M communication" or "machine type communication" MTC as used herein refers to the connection of a device or group of devices to a cellular network to enable remote reporting of measurements to an application server. The application server is adapted to process the received measurements. The measurements may be performed by monitoring of the conditional and environmental variables in a geographical area covered by the measurements.

The term "network element" as used herein refers to a device operable to exchange information in a network environment and configured to communicate traffic, such as packet traffic, using the communication network.

Some embodiments provide a method for machine to machine, M2M, communication management in a cellular system, wherein the cellular system comprises a plurality of devices using the M2M communication, wherein the devices are configured to perform measurements.
The measurement is either performed in the whole area or in parts that belong (and form) to the area. The devices may perform the same measurement and/or different measurements.

The method comprises providing at least one interface for communication between the plurality of the devices and a network element of the cellular system and/or between a management unit of the devices and the network element. The term interface as used herein refers generally to an action that may be implemented by a computing device for interacting with another computing device.

The method further comprises receiving, by the network element, information valid for a future time interval from the devices via the at least one interface, wherein the information is indicative of a prediction of the measurements performed by the devices.
The predicted measurements may be received in the form of continuous functions describing the behavior (e.g. a probability distributed function) of the measurements at the time interval and/or as discrete measurements filed in lookup tables. These functions and/or lookup tables may be generated using previously acquired data by the devices, simulation or theoretical models of the device measurements.
For example, the functions and/or lookup tables may be input by a machine client to a management unit of the devices and/or to the devices via a user interface.

The method further comprises using the received information to reconfigure by the network element the devices to perform in the time interval at least part of the measurements.

These features may be advantageous as they may provide a method for seamlessly integrating devices using the M2M communication in cellular systems and allowing an access network such as 3GPP of the cellular system to communicate with the devices.

Another advantage may be provided in that an efficient use of resources of the devices as well as of the cellular system is ensured by reducing the amount of active devices and/or the amount of data to be transmitted. This may also increase the throughput of the cellular system.

Another advantage may be that these features may prevent potential system congestion that would otherwise happen when performing all the measurements.

Another advantage may be that the cellular system may support a higher number of devices than in the conventional systems.

According to one embodiment, the devices are configured to each perform a measurement of the measurements covering a respective area of the cellular system, the method further comprises determining dependency values between the predicted measurements, wherein the reconfiguration is performed using the determined dependency values. A dependency value may be determined from the predicted measurements of two or more devices of the devices.

According to one embodiment, the network element comprises a core network element of the cellular system. The core network element may be for example a mobile switch center (MSC) or a base station controller (BSC). This may allow the network element to control a larger sample of devices belonging to the cellular system, including devices served by different base stations. Hence, this may increase the overall performance as it may further reduce the amount of resources required to perform measurements by the devices.

According to one embodiment, the area comprises one or more subareas, wherein each of the plurality of areas is a radio cell served by a base station of the cellular system, wherein each subarea is a sector of the radio cell. This may be advantageous as it may ease the integration of the present method in the existing cellular system architectures because the areas may be easily mapped to the geographical cell structure of the cellular system.

According to one embodiment, the network element is further adapted to receive radio emission parameters of each device from a base station serving the area covered by said device. The radio emission parameter may be indicative of a maximum output power of the device and/or a data rate at which the device is transmitting data either to the base station or to any other destination device.

According to one embodiment, the network element comprises a measurement controller at a base station of an access network of the cellular system, wherein the plurality of the devices belongs to the radio cell served by the base station. This may simplify the control and/or the reconfiguration of the devices as they may use similar radio emission parameters within the radio cell e.g. same set of frequencies, and thus may be reconfigured in the same way.

According to one embodiment, a determined dependency value of the dependency values comprises a calculated moment or other statistical parameters between the predicted measurements, the method further comprising generating a mathematical function representing the behavior of the variation of the moment as function of the resources and transmission configuration for the devices, wherein the reconfiguration is performed using the mathematical function. The moment or the statistical parameter may be for example a correlation or a skewness value of the predicted measurements. The predicted measurements may be combined to provide a joint predicted measurement between the devices. The moment may be then determined using the joint predicted measurement. The resources (e.g. bandwidth) and transmission configuration may be for example a maximum data rate at which the devices are allowed to transmit, and/or a modulation scheme to be used in the transmission link between the devices and the base station or any other device. The transmission configuration may also indicate an exclusion of one or more areas initially covered the measurements performed by the devices. The reconfiguration is performed by extracting from the mathematical function the configuration associated with the calculated moment. The mathematical function may be modeled using empirical data, simulation data or by theoretical derivations of the measurements by the devices. This embodiment may be advantageous as it may provide an accurate method for reconfiguring the devices and thus permit an optimal use of the resources.

According to one embodiment, each area comprises one or more subareas, wherein the measurements are performed in N subareas, wherein a determined dependency value is indicative of a correlation level between two predicted measurements in two of the N subareas, wherein in response to a determination that the determined dependency value is different from a predefined threshold value the reconfiguring comprises controlling the devices to perform the at least part of the measurements in the N subareas excluding a first subarea of the two subareas, and using the measurement in the second subarea of the two subareas as a measurement in the first subarea. The two subareas may be associated to two different devices and/or to a same device. This may be advantageous as it may avoid duplicated measurements and thus save resources (e.g. battery life of the device itself, energy saving, reduction of interferences) in case two devices or the same device performs high correlated measurements in two or more subareas.

The method described in this embodiment may be repeated for each pair of subareas having dependency values different from the predetermined threshold value, and taking into account the case that a subarea of a first pair has to be excluded which is also part of a second pair. For example, in case two pairs of subareas (a1, a2) and (a2,a6) have two dependency values different from the predefined threshold, the method may exclude from the measurements the two subareas a1 and a6 and use the measurement in a2 for both a1 and a6 as the two pairs share the same subarea a2.

According to one embodiment, each area comprises one or more subareas, wherein the measurements are performed in N subareas, wherein a determined dependency value is indicative of a dependency level between two predicted measurements in two of the N subareas, wherein in response to a determination that a determined dependency value is different from a predefined threshold value the reconfiguring further comprises controlling the radio emission parameters of the two devices associated with the two subareas respectively, wherein the controlling comprises sending, by the network element, a set of control parameters to each of the two devices, wherein the set of control parameters is selected from the group comprising: a coding scheme parameter indicative of a source coding scheme to be used by the two devices for transmission, a data rate parameter indicative of a maximum data rate at which the two devices are allowed to transmit, a modulation scheme parameter indicative of a modulation scheme to be used by the two devices for transmission. This may be advantageous as it may save the resources of the cellular system since only part of them are effectively used to perform the part of the measurements. For example, a device may be assigned a smaller bandwidth (compared to the bandwidth used by the device for transmitting the measurement that covers one of the subareas having a high dependency value and thus excluded from the measurement) that is needed for its transmission and unassigned subcarriers may be switched off, thus reducing power consumption and interference.

According to one embodiment, each area comprises one or more subareas, wherein the measurements are performed in N subareas, wherein the dependency value comprises a correlation value, wherein the determining comprises combining the predicted measurements for determining a correlation matrix having a size N by N, wherein the correlation matrix comprises the correlation values each indicative of the correlation level between two of the predicted measurements in two of the N subareas. This may ease the overall control of all potentially correlating pairs of subareas.

According to one embodiment, in case the amount of subareas associated to a same device and having dependency values different from the predefined threshold value is higher than a preset maximum number, the method further comprises switching off said device.
This may further save resources of the devices as well as of the cellular system that would otherwise be used by devices that are performing only small part (or not performing measurements at all) of their intended measurements, which may not be useful.

According to one embodiment, the provision of the at least one interface comprises providing the at least one interface for communication in accordance with a predefined communication protocol format. The provision of the at least one interface further comprises providing a user interface in the management unit of the devices and/or in the devices for receiving the information from a machine client. The predetermined protocol format may define, for example, the data format in which the predicted measurements or dependency values may be written (formatted) to be transmitted between the devices and/or the management unit of the devices (e.g. the application server) and the network element. This communication protocol format is also used for formatting the data input via the user interface by the machine client.

According to one embodiment, the information is received from each of the devices. For example, a device may be adapted to generate a prediction of its measurements in an area using previously taken data in a time period corresponding to the time interval and in that area.

According to one embodiment, the information is received from a management unit of the devices. This may reduce the traffic flow in the cellular system in particular when a high number of devices may request access to the network simultaneously.

According to one embodiment, the method further comprises receiving data indicative of predefined operating conditions for performing the measurements by the devices, wherein the reconfiguring is performed based on the predefined operating conditions, wherein in response to a determination that at least part of the conditions is violated, the method further comprises modifying the predefined conditions and sending a request to the management unit to adapt the predefined conditions using the modified conditions. This may prevent potential system congestion and/or mitigate interference that may be caused by inadequate reconfigurations.

Various embodiments relate to a computer program product comprising computer executable instructions to perform the method steps of the method of any one of the preceding embodiments.

Various embodiments relate to a measurement controller for machine to machine, M2M, communication management in a cellular system, wherein the cellular system comprises a plurality of devices using the M2M communication, wherein the devices are adapted to be configured to perform measurements, the measurement controller comprising a memory for storing machine executable instructions and a processor for controlling the measurement controller, wherein execution of the machine executable instructions causes the processor to: receive information valid for a future time interval from the devices via at least one interface, wherein the information is indicative of a prediction of the measurements performed by the devices; use the received information to reconfigure the devices to perform in the time interval at least part of the measurements.

Various embodiments relate to a management unit of devices for machine to machine, M2M, communication management in a cellular system, wherein the cellular system comprises the devices using the M2M communication, wherein the devices are adapted to be configured to per-form measurements, the management unit being adapted to send to a network element of the cellular system information valid for a future time interval via at least one interface, wherein the information is indicative of a prediction of the measurements per-formed by the devices.

Various embodiments relate to a device using machine to machine, M2M, communication in a cellular system, wherein the device is adapted to perform a measurement and send to a network element of the cellular system information valid for a future time interval via at least one interface, wherein the information is indicative of a prediction of the measurement.

It is understood that one or more of the aforementioned embodiments may be combined as long as the combined embodiments are not mutually exclusive.

### Brief description of the drawings

In the following embodiments of the invention are explained in greater detail, by way of example only, making reference to the drawings in which:
Fig. 1 illustrates a simplified structure of an exemplary cellular system for M2M, communication,
Fig. 2 illustrates a further exemplary cellular system for M2M, communication,
Fig. 3 shows a flowchart for a method for machine to machine, M2M, communication in a cellular system, and
Fig.4 shows a simplified example of two cells of a cell structure of a cellular system.

### Detailed description

In the following, like numbered elements in these figures are either similar elements or perform an equivalent function. Elements which have been discussed previously will not necessarily be discussed in later figures if the function is equivalent.

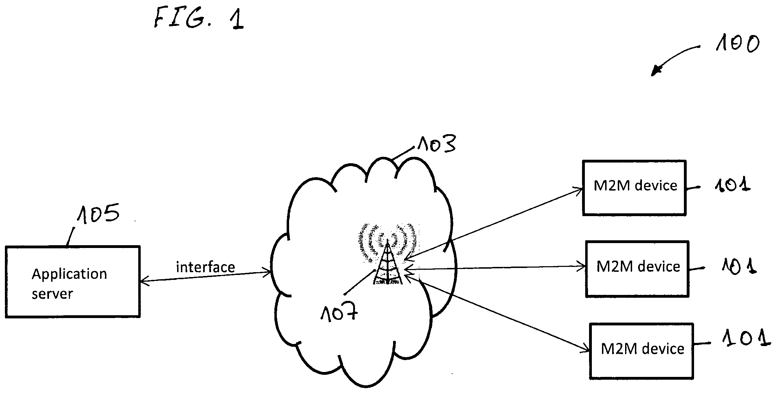

FIG. 1 illustrates a simplified structure of an exemplary cellular system 100. The system 100 comprises a plurality of devices 101, an access network 103, and an M2M application server 105. The access network 103 may comprise a Long Term Evolution (LTE) network. The access network 103 may comprise at least one base station 107. The access network 103 is distributed over land sites called cells, each served by a base station e.g. 107 that creates a radio coverage in that cell. Each cell may be split into sectors. The devices 101 may connect to the access network 103 through the base station 107 that serves said devices 101.

The devices 101 comprise any devices that may perform a data exchange with the access network and/or other devices e.g. M2M application server 105 without human interventions. The devices 101 may act automatically or on remote requests. Examples of the devices 101 include monitoring device (sensor), actuator device (e.g. switch) or any other devices that perform an M2M application. The devices 101 may perform M2M applications for which the measured (or sensed) events might follow some stochastic behavior such as, weather information, flow of cars in a specific location, and the like. The values/events to be sensed may also be correlated on a geographic basis. For example, a bunch of deployed devices may measure values, e.g. temperature, radiation, etc., that are spatially correlated.

The devices 101 are configured to perform a measurement e.g., temperature, radiation that covers an area of the land over which the access network 103 is distributed. For example, the area may be a cell which is served by the base station 107, or part of said cell e.g. sector. The term configuration refers to how the measurement may be performed and with which radio emission parameters each device may act. For example, temperature sensing devices may be deployed in a certain region of the land such that each sensing device may perform temperature measurements covering a single cell. The radio emission parameters may be indicative of a source coding scheme to be used by a device 101 for transmission, data rate at which a device 101 is allowed to transmit, and/or a modulation scheme to be used by a device for transmission.

The M2M application server 105 may connect to the access network 103 through the base station 107 via an interface. The interface is provided in accordance with a predefined communication protocol format that determines an action that may be implemented by the M2M application server 105 for interacting with the base stations 107 e.g. by formatting or writing information destined to the base station in a predefined format with predefined spatial or temporal granularity. In addition, a specific timeslot (e.g. backhaul timeslot) division may be provided such that the M2M application server as well as the base station may exchange data (e.g. predicted measurements) using this timeslot division.

The M2M application server 105 may send the base station 107 information and/or statistics of the events to be measured by the devices 101 served by the base station 107 in a future time interval. In an alternative example, the information may be sent by the devices. The information may be valid for that time interval and may be indicative of a prediction of the measurements to be performed by each of the devices 101 in respective areas.

For example, for each area and for each interval of time (e.g. every one hour of the day for different months of the year) the M2M application server 105 may provide information such as the probability distribution function pdf of the temperature in said time interval covering said area (e.g., by assigning a probability to each possible value of the temperature). In case the pdf is approximated by a symmetric Gaussian distribution, the M2M application server 105 may provide as predicted measurements the mean and variance of the Gaussian distribution.

The information may be further indicative of an Application Minimum Quality Service (AMQS) that defines, for example, the maximum distortion accepted by the measurements of the devices 101. For example, it may comprise a desired range of reliability within which the measures should be delivered.

Upon receiving the information, the base station 107 may use said information to reconfigure the devices 101, by for example, allocating resources in the link between the base station 107 and the devices 101. It may also decide what resources to use (e.g. time, subcarrier or spread code) and what Modulation and Chanel code Scheme (MCS). The base station 107 may also have the capability of choosing and/or supporting the devices 101 with respect to the choice of the source coding scheme to be used by the devices 101 for transmission of data to a remote destination device.

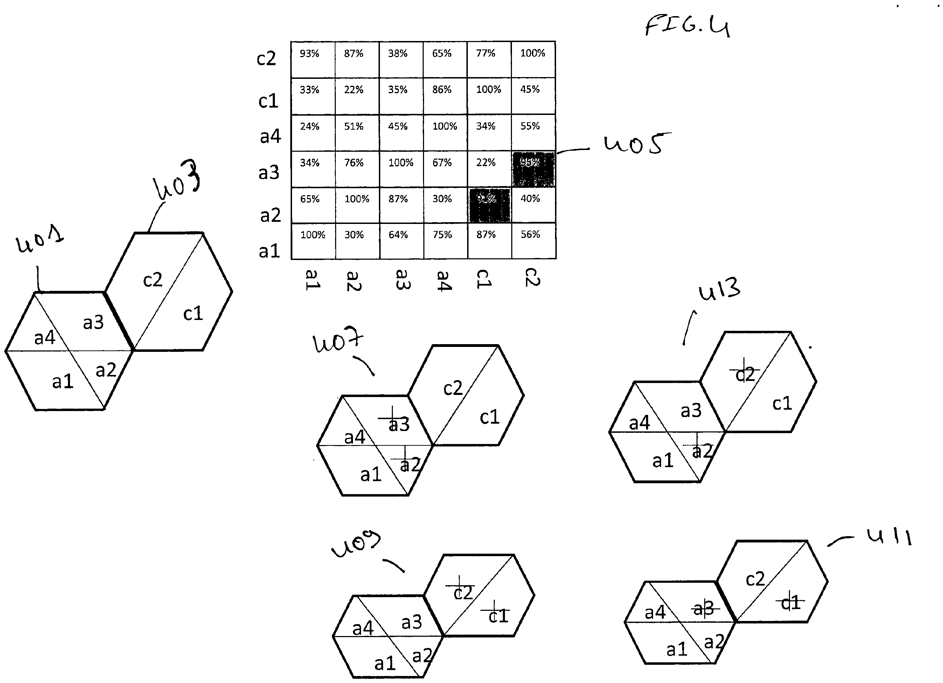

To reconfigure the devices 101, the base station 107 may first determine dependency values between the predicted measurements. Following the above example, in case the base station 107 receives two predicted measurements of two devices covering two respective areas, wherein the predicted measurements are described by two Gaussian distributions, the base station 107 may combine the two pdfs to provide a joint pdf which may also have a Gaussian shape. Further, the base station 107 may calculate a moment (e.g. of a third order) of the joint pdf that describes the dependency between the two predicted measurements. In an alternative example, the base station may calculate a correlation value between the two predicted measurements, and use said correlation value as a dependency value between the two measurements as further explained with reference to Fig. 4.

After determining the dependency values, the base station 107 may use them to reconfigure the devices 101.

For example, the base station 107 may use the calculated moment to determine a new configuration for the two devices associated with the two predicted measurements of the calculated moment. For that, the base station 107 may provide a predetermined mathematical function that represents the behavior of the moment versus resources/transmission configuration i.e. to each moment value a configuration solution is associated for the two devices. The mathematical function may be modeled using empirical data or simulation data derived from the cellular system at runtime or by theoretical derivations. The mathematical function may depend on the number of devices that are associated with the calculated moment e.g. two devices in this example. Using the value of the mathematical function at the calculated moment, the base station 107 may decide to reconfigure the devices 101 using the resources/transmission configuration associated with that calculated moment.

The decision to reconfigure the devices 101 may be based on the received AMQS, and may only be taken if such AMQS are satisfied.

In case the original AMQS cannot be fulfilled due to the radio conditions and device deployments, a new value, a feasible one, is then sent to the M2M application server 105 to request an updated AMQS for next (predicted) measurement reports to the base station. This feedback information can be periodically transmitted. For example, assuming that every temperature sensing device has a reliability of +- 0.5 °C, the final measurement of the temperature in the system 100 will then depend not only on this reliability, but also on the resolution of the source code and on the radio conditions. Since the radio conditions vary, the base station 107 may define that the target reliability is +- 0.5 °C, and it can be decreased to +- 1°C if radio conditions are bad.

The base station 107 may then send reconfiguring information through a dedicated downlink channel to the devices 101, wherein the reconfiguration information is indicative of the resources/transmission configuration data obtained e.g. from the mathematical function. These reconfiguration information may also concern the source code with which the devices may transmit data. For example, the base station 107 may send the devices which source code scheme to employ, which resolution and what is the average correlation with neighbors devices.

The devices 101 will then start to transmit to the base station 107 according to the reconfiguration information received from the base station and the source code received from the base station 107.

During the reception of further information from the devices 101 (composed of payload, ID and additional symbols for channel estimation and synchronization), the base station 107 may re-estimate predicted measurements and the dependency between the predicted measurements based on the cross correlation of the information of the devices 101. This may be advantageous as it takes into account external conditions that can change the operation of the cellular system at runtime. The base station 107 may then send the new predicted measurements and/or dependency values to the M2M application server 105 and/or the devices, which may then be used for further predictions at the same time intervals and areas.

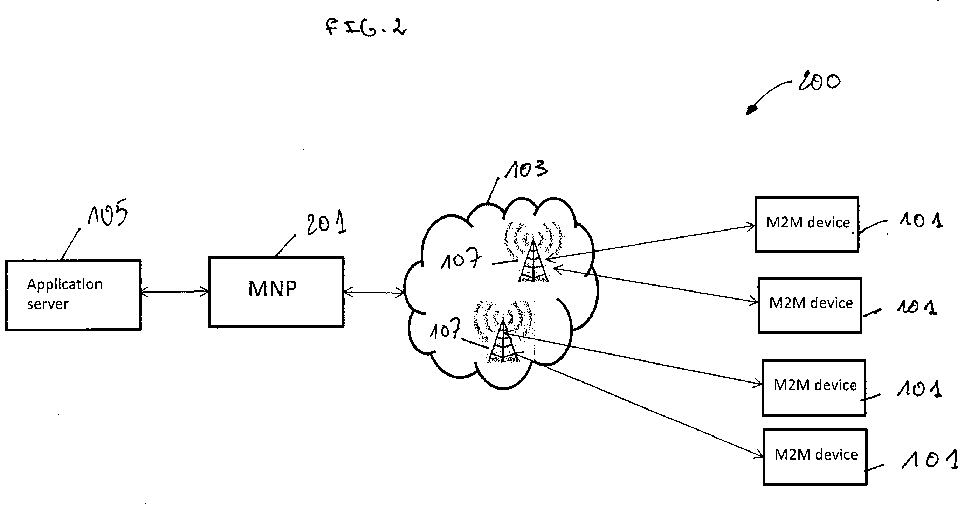

Fig. 2 illustrates a further example of a cellular system 200. The cellular system in Fig. 2 is similar to that shown in Fig. 1. Additionally, a Machine Network Processing (MNP) unit 201 is provided. The reconfiguration and the decision to reconfigure the devices 101 may be performed by the MNP unit 201. This implies that the reconfiguration information of the individual devices served by different base stations 107 can be also evaluated by the MNP 201. This might bring the advantage that the MNP 201 (in contrast to the base station 107) may consider correlations between devices that are geographical neighbors but attached to different base stations in a centralized and effective way.

In addition to the predicted measurements received from the M2M application server 105, the MNP unit 201 receives the radio emission parameters of the devices 101 from the base stations 107. Using said information, the MNP unit 201 may execute the method described above (and executed by the base station 107) to reconfigure the devices 101.

The MNP unit 201 may be part of the core network (not shown) of the cellular system 200. In an alternative example, the MNP 201 may be integrated at the M2M application server 105 having more flexibility and autonomy for the machine application provider.

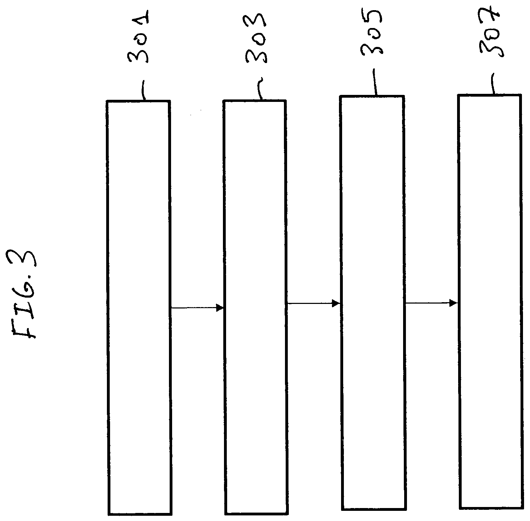

Fig. 3 is a flowchart of a method for machine to machine, M2M, communication management in a cellular system, wherein the cellular system comprises a plurality of devices using the M2M communication, wherein the devices are configured to perform measurements. In step 301 at least one interface for communication between the plurality of the devices and/or a management unit of the devices and a network element of the cellular system is provided. In step 303, the network element receives information valid for a future time interval from the devices via the at least one interface, wherein the information is indicative of a prediction of the measurements performed by the devices. In step 305 dependency values between the predicted measurements are determined. In step 307, the network element uses the determined dependency values to reconfigure by the devices to perform in the time interval at least part of the measurements.

Fig. 4 shows a simplified example of two cells 401, 403 of a cell structure over which the access network 103 is distributed. Each cell is split into subareas. Cell 401 is split to four subareas a1, a2, a3 and a4. Cell 403 is split to two subareas c1 and c2. A first device of the devices 101 may perform measurements in the four subareas a1-a4, while a second device is performing measurements in the two subareas c1 and c2. In an alternative example a same device such as the first device may perform the measurements in all subareas a1-a4 and c1-c2.

As described above with reference to Fig. 1, the base station 107 receives predictions of the measurements in each subarea at a future time interval. The base station 107 may calculate a correlation value between the two predicted measurements in each pair of subareas (e.g. (a1, a3), (a2, c1) etc.). This may result in a correlation matrix 405 having a size 6 by 6. The correlation matrix 405 comprises the correlation values each indicative of the correlation level between two of the predicted measurements in two of the 6 subareas.

The base station 107 may compare each of the correlation values with a predetermined configuration threshold value (e.g. 90% correlation). In case a correlation value is higher than the predetermined configuration threshold value, the base station 107 may reconfigure the two devices such that they perform only part of the measurements in the 6 subareas excluding a subarea of the two subareas associated with said correlation value. For example, the two pairs of subareas (c1, a2) and (c2, a3) have correlation values which are higher than the threshold of 90% correlation. In this case, one of the pairs of two subareas (a2, a3) 407, (c1, c2) 409, (c1, a3) 411 or (c2, a1) 413 may not be covered by the measurements of the first and second devices. In case, the two subareas a2 and a3 are to be excluded from the measurements, the base station 107 may use the measurements of their associated subareas c1 and c2 as measurements of a2 and a3 respectively. This method is described with the correlation value but it is not limited to the correlation value. It can be also applied, for example, with the calculated moment, wherein the exclusion of the pair of subareas (a2, a3), (c1, c2), (c1, a3) or (c2, a1) may be included in the definition of the resources and transmission configuration associated with the calculated moment in the mathematical function.

### List of reference numerals

- 100: cellular system
- 101: devices
- 103: access network
- 105: application server
- 107: base station
- 201: processing unit
- 401-403: cell
- 405: correlation matrix
- 301-307: steps.

## Claims

1. A method for machine to machine, M2M, communication management in a cellular system (100), wherein the cellular system (100) comprises a plurality of devices (101) using the M2M communication, wherein the devices (101) are configured to perform measurements, the method comprising:
- providing at least one interface for communication between the devices (101) and a network element (107,201) of the cellular system and/or between a management unit of the devices and the network element (107,201);
- receiving, by the network element (107,201), information valid for a future time interval from the devices (101) via the at least one interface, wherein the information is indicative of a prediction of the measurements to be performed by the devices (101) in the future time interval;
- using the received information to reconfigure by the network element (107,201) the devices (101) to perform in the future time interval at least part of the measurements;
the devices (101) are configured to each perform a measurement of the measurements covering a respective area of the cellular system (100), the method further comprises determining by the network element dependency values between the predicted measurements, wherein the reconfiguration is performed using the determined dependency values, wherein each area comprises two or more subareas, wherein the measurements are performed in N subareas, wherein a determined dependency value is indicative of a correlation level between two predicted measurements in two of the N subareas, wherein in response to a determination that the determined dependency value is different from a predefined threshold value the reconfiguring comprises controlling the devices to perform the at least part of the measurements in the N subareas excluding a first subarea of the two subareas, and using the measurement in the second subarea of the two subareas as a measurement in the first subarea.

2. The method according to claim 1, wherein the network element comprises a core network element of the cellular system (100).

3. The method according to claim 2, wherein the area comprises one or more subareas, wherein each of the plurality of areas is a radio cell served by a base station of the cellular system (100), wherein each subarea is a sector of the radio cell.

4. The method according to claim 1, wherein the network element comprises a measurement controller at a base station (107) of an access network (103) of the cellular system (100), wherein the devices (101) belongs to the radio cell served by the base station (107).

5. The method according to any of the preceding claims 1-3, wherein a determined dependency value of the dependency values comprises a calculated moment between the predicted measurements, the method further comprising generating a mathematical function representing the behavior of the variation of the moment as function of the resources and transmission configuration for the devices, wherein the reconfiguration is performed using the mathematical function.

6. The method according to any of preceding claims 2-5, wherein each area comprises two or more subareas, wherein the measurements are performed in N subareas, wherein a determined dependency value is indicative of a dependency level between two predicted measurements in two of the N subareas, wherein in response to a determination that a determined dependency value is different from a predefined threshold value the reconfiguring further comprises controlling the radio emission parameters of the two devices associated with the two subareas respectively, wherein the controlling comprises sending, by the network element, a set of control parameters to each of the two devices, wherein the set of control parameters is selected from the group comprising:
• a coding scheme parameter indicative of a source coding scheme to be used by the two devices for transmission,
• a data rate parameter indicative of a maximum data rate at which the two devices are allowed to transmit,
• a modulation scheme parameter indicative of a modulation scheme to be used by the two devices for transmission.

7. The method according to any of the previous claims, wherein the information is received from each of the devices.

8. The method according to any of the previous claims 1-6, wherein the information is received from the management unit of the devices.

9. The method according to claim 8, further comprising receiving data indicative of predefined operating conditions for performing the measurements by the devices, wherein the reconfiguring is performed based on the predefined operating conditions, wherein in response to a determination that at least part of the conditions is violated, modifying the predefined conditions and sending a request to the management unit to adapt the predefined conditions using the modified conditions.

10. A computer program product comprising computer executable instructions to perform the method steps of the method of any one of the preceding claims 1-9.

11. A system comprising a network element (107, 201) and a plurality of devices (101) using the M2M communication, wherein the devices (101) are configured to each perform a measurement covering a respective area of the cellular system, wherein the network element is configured to communicate with the devices via at least one interface, the network element being further configured for
receiving information valid for a future time interval from the devices (101) via the at least one interface, wherein the information is indicative of a prediction of the measurements to be performed by the devices (101) in the future time interval;
using the received information to reconfigure the devices (101) to perform in the future time interval at least part of the measurements; determining dependency values between the predicted measurements, wherein the reconfiguration is performed using the determined dependency values, wherein each area comprises two or more subareas, wherein the measurements are performed in N subareas, wherein a determined dependency value is indicative of a correlation level between two predicted measurements in two of the N subareas, wherein in response to a determination that the determined dependency value is different from a predefined threshold value the reconfiguring comprises controlling the devices to perform the at least part of the measurements in the N subareas excluding a first subarea of the two subareas, and using the measurement in the second subarea of the two subareas as a measurement in the first subarea.

## Patentansprüche

1. Verfahren für ein Kommunikationsverwaltung von Maschine zu Maschine, M2M, in einem zellularen System (100), wobei das zellulare System (100) eine Vielzahl von Geräten (101) aufweist, die die M2M-Kommunikation verwenden, wobei die Geräte (101) dazu ausgelegt sind, Messungen durchzuführen,
wobei das Verfahren Folgendes aufweist:
- Bereitstellen von mindestens einer Schnittstelle zur Kommunikation zwischen den Geräten (101) und einem Netzwerkelement (107, 201) des zellularen Systems und/oder zwischen einer Verwaltungseinheit der Geräte und dem Netzwerkelement (107, 201);
- Empfangen, durch das Netzwerkelement (107, 201), von Informationen, die für ein zukünftiges Zeitintervall gültig sind, von den Geräten (101) über die mindestens eine Schnittstelle, wobei die Informationen eine Voraussage der Messungen angeben, die von den Geräten (101) in dem zukünftigen Zeitintervall durchzuführen sind;
- Verwenden der empfangenen Informationen, um die Geräte (101) durch das Netzwerkelement (107, 201) neu zu konfigurieren, um in dem zukünftigen Zeitintervall zumindest einen Teil der Messungen durchzuführen;
wobei die Geräte (101) dazu ausgelegt sind, dass sie jeweils eine Messung der Messungen durchführen, die einen jeweiligen Bereich des zellularen Systems (100) abdecken, wobei das Verfahren weiterhin das Bestimmen durch das Netzwerkelement von Abhängigkeitswerten zwischen den vorhergesagten Messungen aufweist, wobei die Neukonfiguration mittels der bestimmten Abhängigkeitswerte durchgeführt wird, wobei ein jeder Bereich zwei oder mehrere Unterbereiche aufweist, wobei die Messungen in N Unterbereichen durchgeführt werden, wobei ein bestimmter Abhängigkeitswert eine Korrelationsebene zwischen zwei vorhergesagten Messungen in zwei der N Unterbereiche angibt, wobei in Reaktion auf eine Bestimmung, dass sich der bestimmte Abhängigkeitswert von einem vorbestimmten Grenzwert unterscheidet, die Neukonfiguration ein Steuern der Geräte umfasst, um den zumindest einen Teil der Messungen in den N Unterbereichen durchzuführen, die einen ersten Unterbereich der zwei Unterbereiche ausschließen, und die Messung im zweiten Unterbereich der zwei Unterbereiche als eine Messung im ersten Unterbereich zu verwenden.

2. Verfahren nach Anspruch 1,
wobei das Netzwerkelement ein Kernnetzwerkelement des zellularen Systems (100) aufweist.

3. Verfahren nach Anspruch 2,
wobei der Bereich eine oder mehrere Unterbereiche aufweist, wobei ein jeder der Vielzahl von Bereichen eine Funkzelle ist, die von einer Basisstation des zellularen Systems (100) bedient wird, wobei jeder Unterbereich ein Sektor der Funkzelle ist.

4. Verfahren nach Anspruch 1,
wobei das Netzwerkelement eine Messungssteuereinheit an einer Basisstation (107) eines Zugangsnetzwerks (103) des zellularen Systems (100) aufweist, wobei die Geräte (101) zu der Funkzelle gehören, die von der Basisstation (107) bedient wird.

5. Verfahren nach einem der vorhergehenden Ansprüche 1 bis 3,
wobei ein bestimmter Abhängigkeitswert der Abhängigkeitswerte einen berechneten Moment zwischen den vorhergesagten Messungen aufweist, wobei das Verfahren weiterhin das Generieren einer mathematischen Funktion aufweist, die das Verhalten der Variation des Moments als Funktion der Ressourcen und der Übertrag-ungskonfiguration für die Geräte darstellt, wobei die Neukonfiguration unter Verwendung der mathematischen Funktion durchgeführt wird.

6. Verfahren nach einem der vorhergehenden Ansprüche 2 bis 5,
wobei jeder Bereich zwei oder mehrere Unterbereiche aufweist, wobei die Messungen in N Unterbereichen durchgeführt werden, wobei ein bestimmter Abhängigkeitswert eine Abhängigkeitsebene zwischen zwei vorhergesagten Messungen in zwei der N Unterbereiche angibt, wobei in Reaktion auf eine Bestimmung, dass ein bestimmter Abhängigkeitswert sich von einem bestimmten Grenzwert unterscheidet, die Neukonfiguration weiterhin das Steuern von Funkausstrahlungsparametern der zwei Geräte umfasst, die jeweils den beiden Unterbereiche zugeordnet sind, wobei das Steuern das Senden, durch das Netzwerkelement, eines Satzes von Steuerparametern an jedes der zwei Geräte umfasst, wobei der Satz der Steuerparameter aus der Gruppe ausgewählt ist, die Folgendes aufweist:
• einen Kodierungsschemaparameter, der ein Quellcodeschema angibt, das von den beiden Geräten zur Übertragung zu verwenden ist,
• einen Datenratenparameter, der eine maximale Datenrate angibt, mit der den beiden Geräten eine Übertragung gestattet ist,
• einen Modulationsschemaparameter, der ein Modulationsschema angibt, das von den beiden Geräten zur Übertragung zu verwenden ist,

7. Verfahren nach einem der vorhergehenden Ansprüche,
wobei die Informationen von jedem der Geräte empfangen werden.

8. Verfahren nach einem der vorhergehenden Ansprüche 1 bis 6,
wobei die Informationen von der Verwaltungseinheit der Geräte empfangen werden.

9. Verfahren nach Anspruch 8,
das ferner das Empfangen von Daten umfasst, die vorbestimmte Betriebsbedingungen zum Durchführen der Messungen durch die Geräte angeben, wobei die Neukonfiguration basierend auf den vorbestimmten Betriebsbedingungen durchgeführt wird, wobei in Reaktion auf eine Bestimmung, dass zumindest ein Teil der Bedingungen verletzt wird, die vorbestimmten Bedingungen modifiziert werden und eine Anforderung an die Verwaltungseinheit gesendet wird, um die vordefinierten Bedingungen unter Verwendung der modifizierten Bedingungen anzupassen.

10. Computerprogrammprodukt, das von einem Computer ausführbare Anweisungen aufweist, um die Verfahrensschritte des Verfahrens nach einem der vorhergehenden Ansprüche 1 bis 9 durchzuführen.

11. System, das ein Netzwerkelement (107, 201) und eine Vielzahl von Geräten (101) aufweist, die die M2M-Kommunikation verwenden, wobei die Geräte (101) dazu ausgebildet sind, dass jedes eine Messung durchführt, die einen jeweiligen Bereich des zellularen Systems abdeckt, wobei das Netzwerkelement dazu ausgebildet ist, mit den Geräten über mindestens eine Schnittstelle zu kommunizieren, wobei das Netzwerkelement ferner für Folgendes ausgebildet ist,
- Informationen, die für ein zukünftiges Zeitintervall gültig sind, von den Geräten (101) über die mindestens eine Schnittstelle zu empfangen, wobei die Informationen eine Vorhersage der Messungen angeben, die von den Geräten (101) in dem zukünftigen Zeitintervall durchzuführen sind;
- die empfangenen Informationen zum Neukonfigurieren der Geräte (101) zu verwenden, um im zukünftigen Zeitintervall zumindest einen Teil der Messungen durchzuführen;
- Abhängigkeitswerte zwischen den vorhergesagten Messungen zu bestimmen, wobei die Neukonfiguration mittels der bestimmten Abhängigkeitswerte durchgeführt wird, wobei ein jeder Bereich zwei oder mehrere Unterbereiche aufweist, wobei die Messungen in N Unterbereichen durchgeführt werden, wobei ein bestimmter Abhängigkeitswert eine Korrelationsebene zwischen zwei vorhergesagten Messungen in zwei der N Unterbereiche angibt, wobei in Reaktion auf eine Bestimmung, dass sich der der bestimmte Abhängigkeitswert von einem vorbestimmten Grenzwert unterscheidet, die Neukonfiguration das Steuern der Geräte umfasst, um zumindest einen Teil der Messungen in den N Unterbereichen durchzuführen, die einen ersten Unterbereich der zwei Unterbereiche ausschließen, und die Messung im zweiten Unterbereich der beiden Unterbereiche als eine Messung im ersten Unterbereich zu verwenden.

## Revendications

1. Procédé de gestion de communication machine à machine (M2M) dans un système cellulaire (100), selon lequel le système cellulaire (100) comprend une pluralité de dispositifs (101) utilisant la communication M2M, selon lequel les dispositifs (101) sont configurés pour effectuer des mesures, le procédé comprenant :
la fourniture d'au moins une interface de communication entre les dispositifs (101) et un élément de réseau (107, 201) du système cellulaire et/ou entre une unité de gestion des dispositifs et l'élément de réseau (107, 201) ;
la réception, par l'élément de réseau (107, 201), d'informations valables par rapport à un intervalle de temps futur, en provenance des dispositifs (101) via la au moins une interface, selon laquelle les informations sont une indication d'une prédiction des mesures à effectuer par les dispositifs (101) pendant l'intervalle de temps futur ;
l'utilisation des informations reçues pour reconfigurer les dispositifs (101) par le biais de l'élément de réseau (107, 201) afin d'effectuer au moins une partie des mesures pendant l'intervalle de temps futur ;
les dispositifs (101) étant configurés pour effectuer chacun une mesure parmi les mesures couvrant une zone respective du système cellulaire (100), le procédé comprenant en outre le calcul, par l'élément de réseau, de valeurs de dépendance entre les mesures de prédiction, selon lequel la reconfiguration est effectuée en mettant en oeuvre les valeurs de dépendance calculées, selon lequel chaque zone comprend deux ou plusieurs sous-zones, selon lequel les mesures sont effectuées dans N sous-zones, selon lequel une valeur de dépendance calculée est une indication d'un niveau de corrélation entre deux mesures de prédiction dans deux des N sous-zones, selon lequel en réponse à un calcul que la valeur de dépendance calculée diffère d'une valeur seuil prédéterminée, la reconfiguration comprend le contrôle des dispositifs pour effectuer au moins une partie des mesures dans les N sous-zones à l'exclusion d'une première sous-zone des deux sous-zones, et l'utilisation de le mesure de la deuxième sous-zone des deux sous-zones en tant que mesure de la première sous-zone.

2. Procédé selon la revendication 1, selon lequel l'élément de réseau comprend un élément de réseau coeur du système cellulaire (100).

3. Procédé selon la revendication 2, selon lequel la zone comprend une ou plusieurs sous-zones, selon lequel chacune de la pluralité de zones est une cellule radio desservie par une station de base du système cellulaire (100), selon lequel chaque sous-zone est un secteur de la cellule radio.

4. Procédé selon la revendication 1, selon lequel l'élément de réseau comprend un contrôleur de mesure au niveau d'une station de base (107) d'un réseau d'accès (103) du système cellulaire (100), selon lequel les dispositifs appartiennent à la cellule radio desservie par la station de base (107).

5. Procédé selon l'une quelconques des revendications 1 à 3, selon lequel une valeur de dépendance calculée parmi les valeurs de dépendance comprend un instant calculé entre les mesures prédites, le procédé comprenant en outre la génération d'une fonction mathématique représentant le comportement de la variation de l'instant en fonction des ressources et de la configuration de transmission des dispositifs, selon lequel la reconfiguration est effectuée en mettant en oeuvre la fonction mathématique.

6. Procédé selon l'une quelconque des revendications 2 à 5, selon lequel chaque zone comprend deux ou plusieurs sous-zones, selon lequel les mesures sont effectués dans N sous-zones, selon lequel une valeur de dépendance calculée est une indication d'un niveau de dépendance entre deux mesures prédites dans deux des N sous-zones, selon lequel en réponse à un calcul qu'une valeur de dépendance calculée diffère d'une valeur seuil prédéterminée, la reconfiguration comprend en outre le contrôle des paramètres d'émission radio des deux dispositifs associés respectivement aux deux sous-zones, selon lequel le contrôle comprend l'envoi, par le biais de l'élément de réseau, d'un jeu de paramètres de contrôle à chacun des deux dispositifs, selon lequel le jeu de paramètres de contrôle est choisi parmi le groupe comprenant :
un paramètre de schéma de codage, indiquant un schéma de codage source devant être utilisé par les deux dispositifs pour la transmission ;
un paramètre de taux de données, indiquant un taux maximum de données auquel les deux dispositifs seront autorisés à transmettre ;
un paramètre de schéma de modulation, indiquant un schéma de modulation devant être utilisé par les deux dispositifs pour la transmission.

7. Procédé selon l'une quelconque des revendications précédentes, selon lequel les informations sont reçues de chacun des dispositifs.

8. Procédé selon l'une quelconque des revendications 1 à 6, selon lequel les informations sont reçues de l'unité de gestion des dispositifs.

9. Procédé selon la revendication 8, comprenant en outre la réception de données indiquant des conditions opératoires prédéfinies pour l'exécution des mesures par les dispositifs, selon lequel la reconfiguration est effectuée sur la base des conditions opératoires prédéfinies, selon lequel en réponse à un calcul qu'au moins une partie de la condition a été violée, une modification des conditions prédéfinies est effectuée et une requête envoyée à l'unité de gestion pour effectuer une adaptation des conditions prédéfinies en utilisant les conditions modifiées.

10. Produit de programme d'ordinateur comprenant des instructions exécutables par ordinateur pour effectuer les étapes du procédé selon l'une quelconque des revendications 1 à 9.

11. Système comprenant un élément de réseau (107, 201) et une pluralité de dispositifs (101) utilisant la communication machine à machine (M2M), selon lequel les dispositifs (101) sont configurés pour effectuer chacun des mesures couvrant une zone respective du système cellulaire, selon lequel l'élément de réseau est configuré pour communiquer avec les dispositifs via au moins une interface, l'élément de réseau étant en outre configuré pour :
la réception d'informations valables pour un intervalle de temps futur en provenance des dispositifs (101) via la au moins une interface, selon lequel les informations sont une indication d'une prédiction des mesures à effectuer par les dispositifs (101) pendant l'intervalle de temps futur;
l'utilisation des informations reçues pour reconfigurer les dispositifs (101) afin d'effectuer au moins une partie des mesures pendant l'intervalle de temps futur ;
le calcul de valeurs de dépendance entre les mesures prédites ;
selon lequel la reconfiguration est effectuée en mettant en oeuvre les valeurs de dépendance calculées, selon lequel chaque zone comprend deux ou plusieurs sous-zones, selon lequel les mesures sont effectuées dans N sous-zones, selon lequel une valeur de dépendance calculée est une indication d'un niveau de corrélation entre deux mesures prédites dans deux des N sous-zones, selon lequel en réponse à un calcul que la valeur de dépendance diffère d'une valeur seuil prédéterminée, la reconfiguration comprend le contrôle des dispositifs pour effectuer au moins une partie des mesures dans les N sous-zones à l'exclusion d'une première sous-zone des deux sous-zones, et l'utilisation de la mesure de la deuxième sous-zone des deux sous-zones comme mesure de la première sous-zone.
